Europäisches Patentamt

(19) European Patent Office

Office européen des brevets

(11) Numéro de publication: **0 127 504**
**B1**

(12) **FASCICULE DE BREVET EUROPEEN**

(45) Date de publication du fascicule du brevet: **11.05.88**

(21) Numéro de dépôt: **84400862.3**

(22) Date de dépôt: **27.04.84**

(51) Int. Cl.⁴: **H 05 B 7/144**

(54) **Procédé de fusion métallurgique et four à arc à courant continu pour sa mise en oeuvre.**

(30) Priorité: **03.05.83 FR 8307317**

(43) Date de publication de la demande:
**05.12.84 Bulletin 84/49**

(45) Mention de la délivrance du brevet:
**11.05.88 Bulletin 88/19**

(84) Etats contractants désignés:
**AT BE DE GB IT SE**

(56) Documents cités:
**FR-A- 381 862**
**FR-A-2 190 937**
**FR-A-2 197 988**
**FR-A-2 276 388**
**FR-A-2 381 435**
**FR-A-2 409 476**
**GB-A- 118 357**

(73) Titulaire: **INSTITUT DE RECHERCHES DE LA
SIDERURGIE FRANCAISE (IRSID)
185, rue du Président Roosevelt
F-78105 Saint Germain-en-Laye Cédex (FR)**
(73) Titulaire: **CLECIM SA
107 boulevard de la Mission Marchand
F-92402 Courbevoie Cedex (FR)**

(72) Inventeur: **Motte, Jean-Pierre
15, rue du Coupillon
F-57050 Metz-Devant-les-Ponts (FR)**
Inventeur: **Maurer, Ghislain
2, rue des Anémones
F-57070 Metz (FR)**

(74) Mandataire: **Ventavoli, Roger et al
INSTITUT DE RECHERCHES DE LA SIDERURGIE
FRANCAISE (IRSID) Station d'Essais Boîte
Postale 13
F-57210 Maizieres-lès-Metz (FR)**

Courier Press, Leamington Spa, England.

## Description

La présente invention concerne les fours à arc destinés à l'industrie métallurgique. Dans ce domaine on accorde un intérêt grandissant à l'emploi d'arcs créés en courant continu. Le passage du courant a lieu au travers de la masse métallique à fondre, entre une électrode de voûte mobile placée au-dessus de la masse métallique et entretenant avec celle-ci un arc électrique, et une électrode de sole implantée en paroi (généralement dans le fond du four) et en contact permanent avec la masse à fondre pour assurer le retour du courant. Un tel four est connu du document FR—A—2197988.

L'emploi des fours à arc fonctionnant en courant continu dans la fusion métallurgique a, entre autres, comme avantage de permettre des puissances élevées, adaptées au traitement de masses métalliques importantes dans des fours de grande dimension.

Toutefois, des difficultés peuvent apparaître dans la phase de démarrage de la fusion sur charge solide divisée (ferrailles). Pour bien les comprendre, il est nécessaire de faire un rapide rappel de fonctionnement d'un four électrique à arcs.

Le mode opératoire, parfaitement codifié et commun à tous les fours de ce type quelle que soit la nature du courant qui les alimente (courant alternatif ou continu) consiste, après y avoir enfourné la charge à fondre, à faire descendre lentement les électrodes de voûte au travers de la charge jusqu'au voisinage du fond. Les électrodes creusent ainsi un puits en fondant localement la matière solide à leur contact au cours de la descente. Le métal fondu percole entre les fragments encore solides et forme sur le fond un lit en fusion, également appelé "pied de bain". Une fois les électrodes complètement descendues, la phase de démarrage est terminée et on les remonte lentement tout en entretenant un arc électrique entre la pointe des électrodes et le pied de bain, lequel s'accroît au fur et à mesure de la progression de la fusion. Cette dernière se termine lorsque les électrodes parviennent à leur position haute stable.

En courant alternatif, plusieurs électrodes de voûte à polarités opposées sont mises en oeuvre. Elles sont, par montage, relativement proches l'une de l'autre, à une distance constante. Dans ces conditions, le démarrage de la fusion s'opère facilement puisque le courant électrique se boucle sur deux électrodes au travers de la matière métallique solide comprise entre elles.

Par contre, en courant continu, l'électrode de voûte est trop éloignée de l'électrode de sole dans la phase de démarrage pour permettre un fonctionnement du four à pleine puissance, comme cela serait souhaitable en période de fusion pour un rendement maximum de l'appareil.

Suivant la présente invention, cette difficulté est résolue par l'emploi d'une électrode supplémentaire dans la phase de démarrage où le courant électrique circule au travers de la charge entre deux électrodes de voûte relativement rapprochées. Après la phase de démarrage, on peut mettre en route l'électrode de sole. Ceci permet, sans compliquer exagérément la construction du four et les opérations de fusion, de tirer pleinement profit des particularités du four à arc en courant continu.

L'invention propose ainsi un procédé de fusion métallurgique d'une charge métallique solide divisée dans un four électrique à arcs à courant continu équipé d'une électrode de sole et d'une électrode de voûte mobile, de polarités opposées, caractérisé en ce que, dans la phase de démarrage de la fusion on met en oeuvre une seconde électrode de voûte mobile, que l'on couple électriquement à la première de manière à les mettre à des polarités opposées, on fait pénétrer ensemble les électrodes de voûte progressivement dans la charge à fondre au fur et à mesure de la fusion locale de celle-ci, jusqu'au fond du four, et en ce qu'on provoque ensuite le couplage électrique entre l'électrode de sole et au moins l'une desdites électrodes de voûte, et en ce qu'on poursuit ainsi jusqu'à son achèvement la fusion de la charge selon la pratique habituelle de la marche d'un four à arc à courant continu.

Selon un mode de réalisation préféré, au moins l'une des électrodes de voûte qui servent dans la phase de démarrage est constituée par l'électrode de voûte qui est ensuite utilisée en couplage avec l'électrode de sole en fonctionnement normal.

L'invention propose aussi un four de fusion métallurgique à arc en courant continu, comportant une électrode de sole affleurant au fond du four, et des moyens pour relier à une alimentation électrique en courant continu ladite électrode de sole et au moins une première électrode de voûte sous des polarités opposées, caractérisé en ce qu'il comporte au moins une seconde électrode de voûte et en ce que lesdits moyens de liaison électrique comprennent un commutateur permettant de passer de l'électrode de sole à la seconde électrode de voûte et inversement.

Selon une réalisation, le commutateur permet de mettre les électrodes de voûte à une même polarité, lorsque l'électrode de sole est reliée à l'alimentation électrique.

Le four selon l'invention peut être chargé avec des masses de matériaux à fondre relativement importantes, impliquant au départ une distance entre l'électrode de sole et chaque électrode de voûte relativement grande et très supérieure à celle qui sépare l'extrémité des deux électrodes de voûte au-dessus de la surface de la masse métallique à fondre.

Naturellement, il est possible, dans le cadre de l'invention, de prévoir plusieurs électrodes de sole, coopérant avec plusieurs électrodes de voûte. Toutefois, on n'a en général pas intérêt à multiplier le nombre des électrodes.

Le plus souvent, le four selon l'invention comportera donc une seule électrode se sole, avantagement disposée dans l'axe du four. On peut alors reprendre la disposition habituelle des fours connus, avec l'électrode de voûte utilisée dans la phase de fonctionnement normal pénétrant verticalement dans le four selon l'axe de symétrie, au-dessus de l'électrode de sole unique. La seconde électrode de voûte, nécessaire pour la phase de démarrage, est alors disposée latéralement par rapport à la première pour pouvoir être utilisée en conjonction avec elle dans la phase de démarrage.

Selon un autre forme de mise en oeuvre de l'invention, on peut aussi prévoir de conserver une utilité à toutes les électrodes pendant la phase de fonctionnement normal, en alimentant toutes les électrodes de voûte simultanément sous une même polarité, opposée à celle de l'électrode de sole. Dans ce cas, il est en général préférable de disposer les deux électrodes de voûte nécessaires au démarrage, symétriquement par rapport à l'axe du four et à l'électrode de sole.

Enfin, on a déjà signalé que l'on n'a pas généralement avantage à multiplier le nombre des électrodes, et de ce point de vue deux électrodes de voûte seront en général suffisantes. Néamoins, l'invention n'exclut pas pour autant l'emploi d'un plus grand nombre d'électrodes, par exemple, plusieurs couples d'électrodes de voûte, avec des polarités opposées sur les deux électrodes de chaque couple pendant la phase de démarrage.

Pour faciliter le passage du régime de transition à l'autre dans la mise en oeuvre du four selon l'invention, il est avantageux d'équiper celui-ci de moyens de commutation permettant de connecter l'une des électrodes de voûte (une de chaque couple quant il est prévu plusieurs couples) alternativement à l'un et à l'autre des pôles d'une source d'alimentation électrique, tandis que l'autre électrode de voûte (la première selon la désignation ci-dessus) et l'électrode de sole restent connectées en permanence respectivement à chacun des deux pôles.

Selon d'autres caractéristiques de l'invention, le fond du four forme avantageusement au moins une cuvette de réception de pied de bain à l'extrémité de l'électrode de sole. Eventuellement, une cuvette de pied de bain unique peut s'étendre tout autour de l'électrode de sole jusqu'à une distance suffisante pour comprendre les projections géométriques verticales de toutes les électrodes de voûte. C'est dans ce genre de cuvette que se réunissent, d'une part, la première fraction de métal liquide en début de fusion, d'autre part le reliquat de métal fondu entre deux chargements successifs dans un fonctionnement en discontinu.

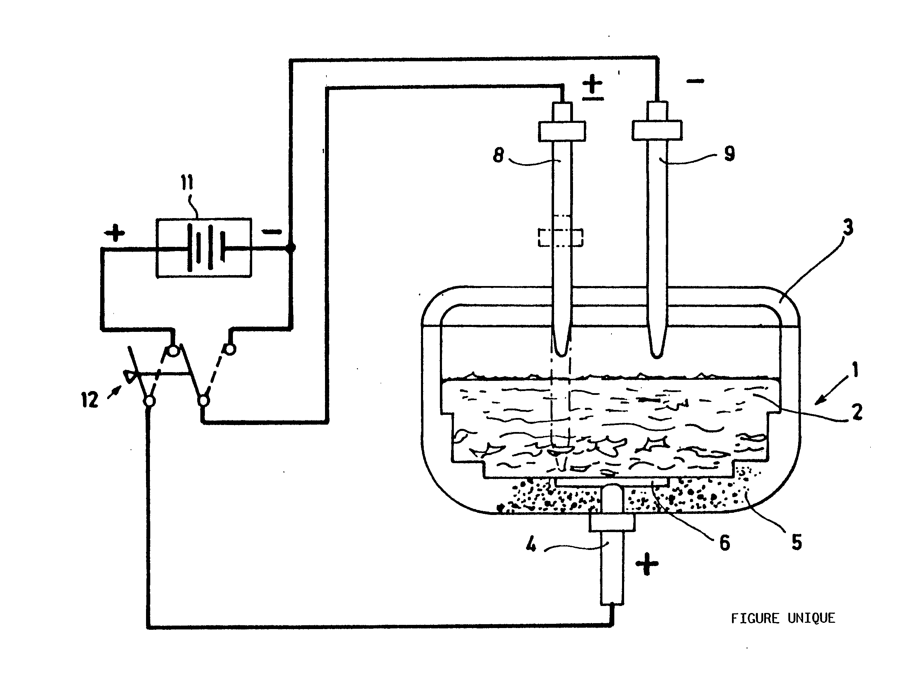

On décrira maintenant plus en détail une forme de réalisation particulière de l'invention qui en fera mieux comprendre les caractéristiques essentielles et les avantages, étant entendu que cette forme de réalisation est choisie à titre d'exemple non limitatif. Sa description est illustrée par le dessin annexé, qui représente sur une figure unique, une vue schématique du four selon l'invention dans la forme de réalisation particulière considérée, montrée partiellement en coupe selon un plan de symétrie vertical.

Sur cette figure, on a donc représenté un four de fusion métallurgique formant un cuve cylindrique 1 destinée à contenir une masse métallique à fondre 2, et fermée par un couvercle 3. Une électrode de sole 4 est montée à travers le fond réfractaire 5 de la cuve 1 jusqu'à affleurer la surface intérieure, au centre d'une cuvette de pied de bain 6 ménagée dans le revêtement réfractaire. La construction de cette électrode de sole est en elle-même classique et bien connue des techniciens spécialistes de la conception des fours à arc fonctionnant sous alimentation électrique en courant continu.

Dans la partie supérieure du four, on remarque deux électrodes de voûte 8 et 9 qui traversent le couvercle 3 du four. Ces électrodes sont disposées verticalement en des positions symétriques par rapport à l'axe du four. Elles sont relativement proches l'une de l'autre par comparaison avec le diamètre de la cuve 1 et par comparaison avec la distance qui les sépare de l'extrémité de l'électrode de sole lorsqu'elles se trouvent en position "haute", telle qu'illustrée sur la figure. Leurs projections géométriques verticales se situent à l'intérieur de la cuvette 6, dont le diamètre est prévu suffisamment large à cet effet.

Les deux électrodes de voûte 8 et 9 sont mobiles chacune verticalement selon leur axe de manière à pouvoir pénétrer à des niveaux variables dans la masse 2 jusqu'à ce que leur extrémité inférieure puisse être amenée jusqu'au fond du four. Les moyens qui permettent d'assurer leur déplacement n'ont pas été représentés sur la figure, car ils sont en eux-mêmes classiques et bien connus des techniciens.

Les trois électrodes 4, 8 et 9 sont connectables à une source de courant continu, symboliquement représentée en 11. Une première des électrodes de voûte, 9, est reliée en permanence au pôle négatif, tadis qu'un commutateur 12 (commutateur double à deux positions) permet suivant sa position, soit de connecter la seconde électrode de voûte 8 au pôle positif en laissant l'électrode de sole 4 hors tension (position en trait plein), soit de connecter l'électrode de voûte 8 au pôle négatif, en parallèle avec la première, et l'électrode de sole 4 au pôle positif (position en trait interrompu).

Dans la mise en oeuvre du four décrit et représenté, une opération de fusion implique deux phases. Initialement, le commutateur est dans la position figurée en trait plein, pour la phase de démarrage. Les électrodes de voûte 8 et 9 sont mises sous tension à des polarités opposées et amenées jusqu'à la surface libre des matériaux à fondre. Au moment du contact, le courant électrique s'établit qui provoque la fusion des matériaux à la pointe de chaque électrode. Au fur et à mesure que la fusion locale progresse, on fait descendre les électrodes, qui creusent des puits. Ceci jusqu'à ce qu'elles atteignent le fond du four, au voisinage de la cuvette 6. A la fin de cette phase de démarrage, le liquide remplit la cuvette 6, formant ainsi le pied de bain.

On passe alors à la phase de fonctionnement normal en actionnant le commutateur 12 (position représentée en traits discontinus). Les électrodes 8 et 9 fonctionnent alors toutes deux en parallèle et en opposition de polarité avec l'électrode de sole 4. Les arcs de décharge électrique apparaissent sans difficulté du fait de la proximité des pointes des électrodes et de l'existence du pied de bain formé précédemment. Les électrodes de voûte sont ensuite remontées lentement jusqu'à la fusion complète de toute la charge.

Naturellement, bien des variantes peuvent être apportées à la conception du four qui vient d'être décrit et à son utilisation sans sortir du cadre de l'invention.

## Revendications

1. Procédé de fusion métallurgique d'une charge métallique solide divisée dans un four électrique à arcs à courant continu équipé d'une électrode de sole et d'une électrode de voûte mobile, susceptibles d'être mises à des polarités opposées, selon lequel, dans la phase de démarrage de la fusion, on met en oeuvre une seconde électrode de voûte mobile, caractérisé en ce que l'on couple électriquement les électrodes de voûte de manière à les mettre à des polarités opposées pour créer des arcs entre respectivement les dites électrodes de voûte et la charge métallique et provoquer ainsi la fusion de la dite charge à la pointe de chaque électrode; on fait pénétrer ensemble les électrodes de voûte progressivement dans la charge à fondre au fur et à mesure de la fusion locale de celle-ci, jusqu'au fond du four, et en ce qu'on provoque ensuite le couplage électrique entre l'électrode de sole et au moins l'une desdites électrodes de voûte, et en ce qu'on poursuit ainsi jusqu'à son achèvement la fusion de la charge selon la pratique habituelle de la marche d'un four à arc à courant continu.

2. Procédé selon la revendication 1 caractérisé en ce que au moins l'une des électrodes de voûte qui servant dans la phase de dèmarrage est constituée par l'électrode de voûte qui est ensuite utilisée en couplage avec l'électrode de sole en fonctionnement normal.

3. Four de fusion métallurgique à arc en courant continu, comportant au moins une électrode de sole (4) affleurant au fond (5) du four, et des moyens pour relier à une alimentation électrique en courant continu (11) ladite électrode de sole et au moins une première électrode de voûte (9) sous des polarités opposées, et comportant au moins une second électrode de voûte (8) et des moyens de liaison électrique constitués par un commutateur (12) permettant de passer de l'électrode de sole à la seconde électrode de voûte et inversement, caractérisé en ce qu'il comporte aussi des moyens de commutation permettant de connecter la seconde électrode de voûte (8) à l'un ou à l'autre des pôles de la source d'alimentation électrique (11).

4. Four selon la revendication 3, caractérisé en ce qu'il comporte deux électrodes de voûte, l'une (9) d'entre elles constituant ladite première électrode de voûte.

5. Four selon la revendication 3 ou 4, caractérisé en ce que l'électrode de sole (4) est disposée dans l'axe du four et les deux électrodes de voûte (8, 9) symétriquement par rapport à cet axe.

6. Four selon revendication 3, 4 ou 5, caractérisé en ce que l'autre électrode de voûte (la première (9) selon la désignation ci-dessus) et l'électrode de sole (4) restent connectées en permanence respectivement à chacun des deux pôles.

7. Four selon l'une quelconque des revendications 3 à 6 caractérisé en ce que le fond du four forme au moins une cuvette (6) de réception de pied de bain, à l'extrémité de l'électrode de sole.

8. Four selon la revendication 7, caractérisé en ce qu'une cuvetté de pied de bain unique (6) s'étend tout autour de l'électrode de sole (4) jusqu'à une distance suffisante pour comprendre les projections verticales de toutes les électrodes de voûte.

## Patentansprüche

1. Metallurgisches Schmelzverfahren einer festen, metallischen, unterteilten Beschickung in einem elektrischen Gleichstrom-Lichtbogenofen, der eine Bodenelektrode und eine bewegliche Oberelektrode aufweist, an die unterschiedliche Polaritäten gelegt werden können, wobei zu Beginn des Schmelzvorgangs eine zweite bewegliche Oberelektrode verwendet wird, dadurch gekennzeichnet, daß die Oberelektroden elektrisch derart angeschlossen werden, daß sie mit entgegengesetzter Polarität beaufschlagt werden, um entsprechende elektrische Bögen zwischen diesen Elektroden und der metallischen Beschickung zu erzeugen und derart das Schmelzen der Beschickung an der Spitze jeder Elektrode einzuleiten; die Oberelektroden werden zunehmend zusammen in die Beschickung eingeführt in dem Maße wie diese örtlich schmilzt bis zum Boden des Ofens, wonach die elektrische Verbindung zwischen der Bodenelektrode und wenigstens einer der Oberelektroden hergestellt wird, wonach der vollständige Schmelzvorgang der Beschickung in herkömmlicher Weise für den Betrieb eines Gleichstrom-Lichtbogenofens erfolgt.

2. Verfahren nach Anspruch 1, dadurch gekennzeichnet, daß wenigstens eine der zu Beginn eingesetzten Oberelektroden aus der Oberelektrode besteht, die anschließend mit der Bodenelektrode zur normalen Betriebweise verbunden wird.

3. Gleichstrom-Lichtbogenofen zum metallischen Schmelzen mit wenigstens einer Bodenelektrode (4), die mit dem Bogen (5) des Ofens fluchtet und mit einer Anordnung um diese Bodenelektrode mit einer elektrischen Gleichstromversorgung (11) zu verbinden und mit wenigstens einer Oberelektrode (9) entgegengesetzter Polarität und mit wenigstens einer zweiten Oberelektrode (8) sowie mit einer elektrischen Verbindungsanordnung, die aus einem Umschalter (12) besteht zum Umschlaten von der Bodenelektrode zur zweiten Oberelektrode und umgekehrt, dadurch gekennzeichnet, daß er außerdem eine Umschaltanordnung aufweist, die ein Verbinden der zweiten Oberelektrode (8) mit dem einen oder dem anderen Pol der elecktrischen Versorgungsquelle (11) ermöglicht.

4. Ofen nach Anspruch 3, dadurch gekennzeichnet, daß er zwei Oberelektroden aufweist, von denen eine (9) die erste Oberelektrode ist.

5. Ofen nach Ansprüchen 3 und 4, dadurch gekennzeichnet, daß die Bodenelektrode (4) in der Achse des Ofens angeordnet ist und daß die beiden Oberelektroden (8, 9) symmetrisch zu dieser Achse sind.

6. Ofen nach Anspruch 3, 4 oder 5, dadurch gekennzeichnet, daß die andere Oberelektrode (die erste 9 gemäß der hier verwendeten Bezeichnung) und die Bodenelektrode (4) ständig mit je einem der beiden Pole verbunden sind.

7. Ofen nach einem der Ansprüche 3 bis 6, dadurch gekennzeichnet, daß der Boden des Ofens wenigstens eine Aufnahmeöffnung (6) für das Schmelzbad aufweist am Ende der Bodenelektrode.

8. Ofen nach Anspruch 7, dadurch gekennzeichnet, daß eine einzige Schmelzbadöffnung (6) sich um die Bodenelektrode (4) herum bis zu einer Entfernung erstreckt, die ausreichend ist, um die senkrechten Vorsprünge sämtlicher Oberelektroden aufzunehmen.

**Claims**

1. A method for metallurgically melting a divided solid metal charge in an electric direct current arc furnace provided with a bottom electrode and a mobile roof electrode adapted to be oppositely poled by which method a second mobile roof electrode is used in the starting phase of melting, characterized in that the roof electrodes are coupled electrically so as to be oppositely poled to create arcs between said roof electrodes, respectively, and the metal charge and thus effect the melting of said charge at the tip of each electrode the roof electrodes are made to penetrate together the melting charge progressively in accordance with the local fusion of the latter as far as the bottom of the furnace and in that electric coupling is then effected between the bottom electrode and at least one of said roof electrodes and in that the melting of the charge is continued in this way until its completion according to the customary practice of the working of a direct current arc furnace.

2. A method according to claim 1, characterized in that at least one of the roof electrodes which serve in the starting phase is constituted by the roof electrode which is then used coupled with the bottom electrode in normal operation.

3. A direct current arc furnace for metallurgic melting, comprising at least one bottom electrode (4) flush with the bottom (5) of the furnace, and means for connecting to a direct current power supply (11) said bottom electrode and at least a first roof electrode (9) oppositely poled, and comprising at least a second roof electrode (8) and electrical connection means constituted by a commutator (12) switching from the bottom electrode to the second roof electrode and vice versa, characterized in that it also comprises commutation means allowing for connection of the second roof electrode (8) to one or the other of the poles of the power supply source (11).

4. A furnace according to claim 3, characterized in that it comprises two roof electrodes, one (9) of them constituting said first roof electrode.

5. A furnace according to claim 3 or 4, characterized in that the roof electrode (4) is disposed on the axis of the furnace and the two roof electrodes (8, 9) symmetrically with respect to this axis.

6. A furnace according to claim 3, 4 or 5, characterized in that the other roof electrode (the first (9) according to the above designation) and the bottom electrode (4) remain permanently connected respectively to each of the two poles.

7. A furnace according to any of claims 3 to 6, characterized in that the bottom of the furnace forms at least one heel receiving basin (6), at the end of the bottom electrode.

8. A furnace according to claim 7, characterized in that one heel basin (6) extends all around the bottom electrode (4) as far as a sufficient distance for including the vertical projections of all the roof electrodes.

FIGURE UNIQUE

0 127 504